# EUROPEAN PATENT SPECIFICATION

(11) **EP 2 832 429 B1**
(45) Date of publication and mention of the grant of the patent: **20.02.2019**
(21) Application number: 13768953.5
(22) Date of filing: 29.03.2013
(51) Int. Cl.: B01D 71/02, B01D 69/04, B01D 69/10, B01D 69/12, C04B 38/00, C04B 41/85, B01D 46/24

(54) **HONEYCOMB SHAPED POROUS CERAMIC BODY, MANUFACTURING METHOD FOR SAME, AND HONEYCOMB SHAPED CERAMIC SEPARATION MEMBRANE STRUCTURE**
WABENFÖRMIGER PORÖSER KERAMIKKÖRPER, HERSTELLUNGSVERFAHREN DAFÜR UND WABENFÖRMIGE KERAMISCHE TRENNMEMBRANSTRUKTUR
CORPS EN CÉRAMIQUE POREUX EN FORME DE NID D'ABEILLES, SON PROCÉDÉ DE FABRICATION, ET STRUCTURE À MEMBRANE DE SÉPARATION EN CÉRAMIQUE EN FORME DE NID D'ABEILLES

(30) Priority: 30.03.2012 JP 2012080205
(43) Date of publication of application: 04.02.2015
(73) Proprietor: NGK Insulators, Ltd., Nagoya-shi, Aichi 467-8530 (JP)
(72) Inventor: MIYAHARA, Makoto, Nagoya-shi Aichi 467-8530 (JP); ICHIKAWA, Makiko, Nagoya-shi Aichi 467-8530 (JP); YAJIMA, Kenji, Nagoya-shi Aichi 467-8530 (JP); TERANISHI, Makoto, Nagoya-shi Aichi 467-8530 (JP); UCHIKAWA, Tetsuya, Nagoya-shi Aichi 467-8530 (JP); SUZUKI, Hideyuki, Nagoya-shi Aichi 467-8530 (JP)
(74) Representative: TBK
(86) International application number: PCT/JP2013/059773
(87) International publication number: WO 2013/147272

(56) References cited:
- WO-A1-2010/134514
- JP-A- 2004 305 993
- JP-A- 2010 532 259
- US-A1- 2008 105 613
- US-A1- 2009 000 475
- US-A1- 2010 072 127

## Description

### Technical Field

The present invention relates to a honeycomb shaped porous ceramic body to manufacture a separation layer having a pressure resistance, a manufacturing method for the same, and a honeycomb shaped ceramic separation membrane structure including the separation layer.

### Background Art

In recent years, ceramic filters have been used to selectively collect only a specific component from a mixture (a mixed fluid) of multiple components. The ceramic filter is more excellent in mechanical strength, durability, corrosion resistance and the like as compared with an organic polymer filter, and hence the ceramic filter is preferably applied to removal of a suspended substance, bacteria, dust and the like from a liquid or a gas, in a wide range of fields of water treatment, exhaust gas treatment, pharmaceutical, food, or the like.

In such a ceramic filter, for the purpose of improving a water permeation performance while maintaining a separation performance, it is necessary to enlarge a membrane area (the area of a separation membrane), and for that, the membrane preferably possesses a honeycomb shape. Furthermore, the filter of the honeycomb shape (a honeycomb shaped ceramic separation membrane structure) has advantages such as resistivity to breakage and achievement of cost reduction as compared with a tube type. In many cases, the honeycomb shaped ceramic separation membrane structure includes a porous substrate whose outer shape is columnar and which has therein a large number of parallel through channels (referred to as cells) formed in an axial direction thereof. Furthermore, the separation membrane having smaller pore diameters than the porous substrate is formed on an inner wall surface provided with the cells.

In the honeycomb shaped ceramic separation membrane structure (a precision filtration membrane, an ultrafiltration membrane, a pervaporation membrane, a gas separation membrane, or a reverse osmosis membrane), a permeation flow rate is preferably increased by applying a high pressure during operation. Particularly, in the ultrafiltration membrane, the gas separation membrane and the reverse osmosis membrane, a permeation coefficient of the separation membrane is small, and hence it is necessary to perform separation and purification under a high operation pressure. In Patent Document 1, there has been reported a pressure-resistant zeolite separation membrane having a zeolite membrane thickness of 0.5 to 30 µm.

Furthermore, in Patent Document 2, there has been described a cross flow filtration device in which a permeation flow rate is improved.

### Citation List

### Patent Documents

[Patent Document 1] JP 3128517
[Patent Document 2] JP-B-H06-016819
Further, US 2009/0000475 A1 discloses zeolite membrane structures. US 2010/0072127 A1 discloses a separation membrane complex. US 2008/0105613 A1 discloses a ceramic filter.

### Summary of the Invention

### Problem to be Solved by the Invention

However, in a conventional honeycomb shaped ceramic separation membrane structure, there is the problem that when an operation pressure is heightened to increase a permeation flow rate, cracks are generated in a separation membrane or the like, thereby deteriorating a separation performance. Furthermore, when a porous substrate is a self-sintering type as in Patent Document 1, a firing temperature is high and cost is high. In Patent Document 2, a shape of the separation membrane is stipulated from the viewpoint of the permeation flow rate, however there is not especially described about strength.

An object (problem) of the present invention is to provide a honeycomb shaped porous ceramic body to manufacture a honeycomb shaped ceramic separation membrane structure in which a separation performance does not deteriorate at a higher operation pressure than before, a manufacturing method for the porous ceramic body, and the honeycomb shaped ceramic separation membrane structure. Means for Solving the Problem

The present inventors have found that the above problem can be solved by including an alumina-containing alumina surface layer at the outermost surface of an intermediate layer. That is, according to the present invention, there are provided a honeycomb shaped porous ceramic body, a manufacturing method for the porous body, and a honeycomb shaped ceramic separation membrane structure in the following.
[1] A honeycomb shaped porous ceramic body including a honeycomb shaped substrate which has partition walls made of a porous ceramic material provided with a large number of pores and in which there are formed a plurality of cells to become through channels of a fluid passing through the porous ceramic body by the partition walls; an intermediate layer which is made of a porous ceramic material provided with a large number of pores and having an average pore diameter smaller than that of the surface of the substrate and which is disposed in the surface of the substrate; and an alumina-containing alumina surface layer at the outermost surface of the intermediate layer, wherein the alumina surface layer includes a magnesium-based compound, and Mg in the magnesium-based compound is included in the alumina surface layer so that a mass ratio represented by (Mg/(Mg + Al)) x 100 is 30 mass% or less.
[2] The honeycomb shaped porous ceramic body according to the above [1], wherein the alumina surface layer is formed of alumina particles having particle diameters of 0.4 to 3 µm.
[3] The honeycomb shaped porous ceramic body according to any one of the above [1] to [2], wherein in a part of at least one of the substrate and the intermediate layer, aggregate particles are bonded to one another by an inorganic bonding component.
[4] A honeycomb shaped ceramic separation membrane structure including the honeycomb shaped porous ceramic body according to any one of the above [1] to [3] and a separation layer which separates a mixed fluid at the surface of the alumina surface layer of the honeycomb shaped porous ceramic body.
[5] The honeycomb shaped ceramic separation membrane structure according to the above [4], wherein a separation performance holding strength as a maximum pressure at which defects are not generated in the separation layer due to pressurizing and hence a separation performance does not deteriorate is 6 MPa or more.
[6] The honeycomb shaped ceramic separation membrane structure according to the above [4] or [5], wherein the separation layer is a gas separation membrane for use to selectively separate carbon dioxide.
[7] The honeycomb shaped ceramic separation membrane structure according to any one of the above [4] to [6], wherein the separation layer is made of zeolite.
[8] A manufacturing method as defined in claim 8.

### Effect of the Invention

A honeycomb shaped porous body of the present invention includes an alumina-containing alumina surface layer at the outermost surface of an intermediate layer, so that it is possible to improve a strength of a separation layer formed on the alumina surface layer. Therefore, in a honeycomb shaped ceramic separation membrane structure including the separation layer which separates a mixed fluid at the surface of the alumina surface layer of the honeycomb shaped porous ceramic body, even at a high operation pressure, cracks are not generated in the separation layer or the alumina surface layer, and a separation performance does not deteriorate.

### Brief Description of the Drawings

Fig. 1 is a perspective view showing a cut-out part of one embodiment of a honeycomb shaped ceramic separation membrane structure according to the present invention;
Fig. 2 is a partially enlarged sectional view showing an enlarged vicinity of a separation cell of a cross section cut along the line A-A' of Fig. 1;
Fig. 3 is a schematic view showing an end face of a porous body;
Fig. 4A is a schematic view showing an embodiment in which the honeycomb shaped ceramic separation membrane structure is attached to a housing, and showing a cross section parallel to a cell extending direction of the ceramic separation membrane structure;
Fig. 4B is a schematic view showing another embodiment in which a honeycomb shaped ceramic separation membrane structure is attached to a housing, and showing a cross section parallel to a cell extending direction of the ceramic separation membrane structure;
Fig. 5 is a schematic view showing a state where a seeding slurry is poured in a particle adhering step;
Fig. 6 is a schematic view showing one embodiment of a membrane forming step of forming a zeolite membrane on the porous body by hydrothermal synthesis; and
Fig. 7 is a perspective view showing another embodiment of the honeycomb shaped ceramic separation membrane structure according to the present invention.

### Mode for Carrying out the Invention

Hereinafter, an embodiment of the present invention will be described with reference to the drawings.

### 1. Honeycomb Shaped Ceramic Separation Membrane Structure

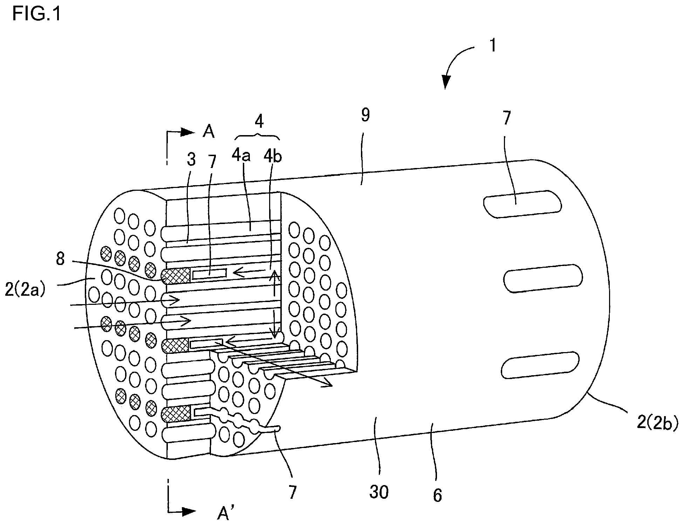

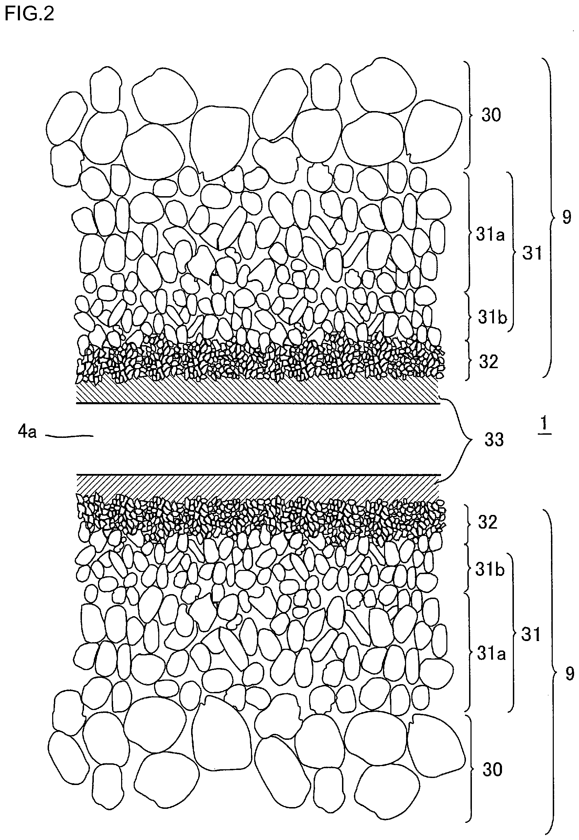

Fig. 1 shows one embodiment of a honeycomb shaped ceramic separation membrane structure 1 according to the present invention. Furthermore, Fig. 2 shows a partially enlarged sectional view showing an enlarged vicinity of a separation cell of a cross section cut along the line A-A' of Fig. 1. The honeycomb shaped ceramic separation membrane structure 1 (hereinafter also referred to simply as the separation membrane structure) includes a substrate 30 of a honeycomb shape, an intermediate layer 31, an alumina surface layer 32, and a separation layer 33 (in the present description, the substrate 30, the intermediate layer 31 and the alumina surface layer 32 are referred to as a honeycomb shaped porous ceramic body 9 (hereinafter also referred to simply as the porous body 9)).

The separation membrane structure 1 has partition walls 3 including a porous ceramic material provided with a large number of pores, and cells 4 that become through channels of a fluid are formed by the partition walls 3. The intermediate layer 31 is provided with a large number of pores, has a smaller average pore diameter than the surface of the substrate 30, and is disposed at the surface of the substrate 30. At least a part of the substrate 30 and the intermediate layer 31 of the porous body 9 preferably has a structure in which aggregate particles are bonded to one another by an inorganic bonding material component. In other words, one of the substrate 30 and the intermediate layer 31 (when the intermediate layer 31 includes a plurality of layers as described later, one of the layers) may be self-sintering (without any inorganic bonding material component). A shape of the substrate 30 is a honeycomb shape, so that a membrane area per unit volume can be enlarged, and a treatment ability can be heightened.

For the porous body 9 including the substrate 30, the intermediate layer 31 and the alumina surface layer 32, its outer shape is columnar, and the porous body has an outer peripheral surface 6. Furthermore, the porous body includes a plurality of separation cells 4a formed in a row to extend through the porous body from one end face 2a to the other end face 2b, and a plurality of water collecting cells 4b formed in a row from the one end face 2a to the other end face 2b. A sectional shape of the separation cells 4a and the water collecting cells 4b of the separation membrane structure 1 is circular. Furthermore, open ends of both the end faces 2a, 2b of the separation cells 4a are open (remain open). For the water collecting cells 4b, open ends of both the end faces 2a, 2b are plugged with a plugging material to form plugging portions 8, and discharge through channels 7 are disposed so that the water collecting cells 4b communicate with an external space. Furthermore, the separation layer 33 is disposed at the surface of the alumina surface layer 32 of an inner wall surface provided with the separation cells 4a having a circular sectional shape. A glass seal 35 is preferably disposed to cover at least the end faces 2a, 2b of the substrate 30. The separation membrane structure 1 is a ceramic filter which separates a mixture.

In the separation membrane structure 1, a separation performance holding strength as a maximum pressure at which defects are not generated in the separation layer 33 due to pressurizing and a separation performance does not deteriorate is 6 MPa or more. The separation performance holding strength is the maximum pressure at which the deterioration of the separation performance did not occur after the cells of the separation membrane structure 1 are pressurized. That is, it is considered that when (a separation coefficient after the pressurizing/a separation coefficient before the pressurizing) < 1, the separation performance deteriorates, and the maximum pressure at which the separation performance does not deteriorate is the separation performance holding strength. In the separation membrane structure 1 of the present invention, the outermost surface of the porous body 9 is the alumina surface layer 32, whereby even when the insides of the cells 4 are pressurized, cracks are not easily generated in the porous body 9 or the separation layer 33. Therefore, the deterioration of the separation performance does not easily occur. Hereinafter, the substrate 30, the intermediate layer 31, the alumina surface layer 32, the separation layer 33 and the like will be described in detail.

### (Substrate)

In the substrate 30, an average pore diameter is preferably from 5 to 25 µm. The average pore diameter is further preferably from 6 to 20 µm. When the average pore diameter of the substrate 30 is 5 µm or more, a permeation speed of a permeated separation component separated by the separation layer 33 in the substrate 30 is fast, and a permeation flow rate per unit time can sufficiently be obtained. On the other hand, when the average pore diameter is 25 µm or less, a membrane on the substrate is easily uniformly formed. It is to be noted that the average pore diameter is a value measured from a portion of the substrate 30 which is cut out from the fired substrate (product) by an air flow method described in ASTM F316.

Furthermore, a porosity of the substrate 30 is preferably from 25 to 50%. The average pore diameter and the porosity are values measured by a mercury porosimeter.

A material of the substrate 30 is ceramic. Preferably, a material of aggregate particles is alumina (Al₂O₃), titania (TiO₂), mullite (Al₂O₃·SiO₂), potsherd, cordierite (Mg₂Al₄Si₅O₁₈) or the like. In these materials, alumina is further preferable because a raw material (aggregate particles) in which particle diameters are controlled is easily obtained, a stable kneaded material can be formed, and a corrosion resistance is high. The inorganic bonding material is preferably one selected from the group consisting of titania, mullite, sinterable alumina, silica, glass frit, clay mineral, and sinterable cordierite. The inorganic bonding material is a bonding material to bond aggregate particles, and is an inorganic component which sinters and solidifies when a component of the bonding material is adhered (bonded) to the aggregate particles at a temperature at which a component of aggregates does not sinter. When alumina is selected as the component of the aggregates, sinterable alumina has an average particle diameter of 1/10 or less of that of the aggregates. When cordierite is selected as the component of the aggregates, sinterable cordierite has an average particle diameter of 1/10 or less of that of the aggregates. It is to be noted that the average particle diameter is an average value of 30 longest diameters measured by microstructure observation of a cross section of the substrate 30, the intermediate layer 31 or the like by an SEM. Furthermore, examples of the clay mineral include kaolin, dolomite, montmorillonite, feldspar, calcite, talc, and mica.

There is not any special restriction on the whole shape or size of the substrate 30, as long as a separating function is not disturbed. Examples of the whole shape include a columnar (cylindrical) shape, a quadrangular pillar shape (a tubular shape in which a cross section perpendicular to a central axis is quadrangular), and a triangular pillar shape (a tubular shape in which the cross section perpendicular to the central axis is triangular). Above all, the shape is preferably columnar so that the substrate is easily extruded, has less firing deformation, and is easily sealed to a housing. When the substrate is used in precise filtration or ultrafiltration, the shape is preferably columnar in which a diameter of the cross section perpendicular to the central axis is from 30 to 220 mm, and a length (the total length) in a central axis direction is from 150 to 2000 mm.

Examples of the sectional shape of the cells 4 of the substrate 30 (the shape in the cross section perpendicular to an extending direction of the cells 4) include a circular shape, an elliptic shape, and a polygonal shape, and examples of the polygonal shape include a quadrangular shape, a pentangular shape, a hexagonal shape and a triangular shape. It is to be noted that the extending direction of the cells 4 is the same as the central axis direction, when the substrate 30 is columnar (cylindrical).

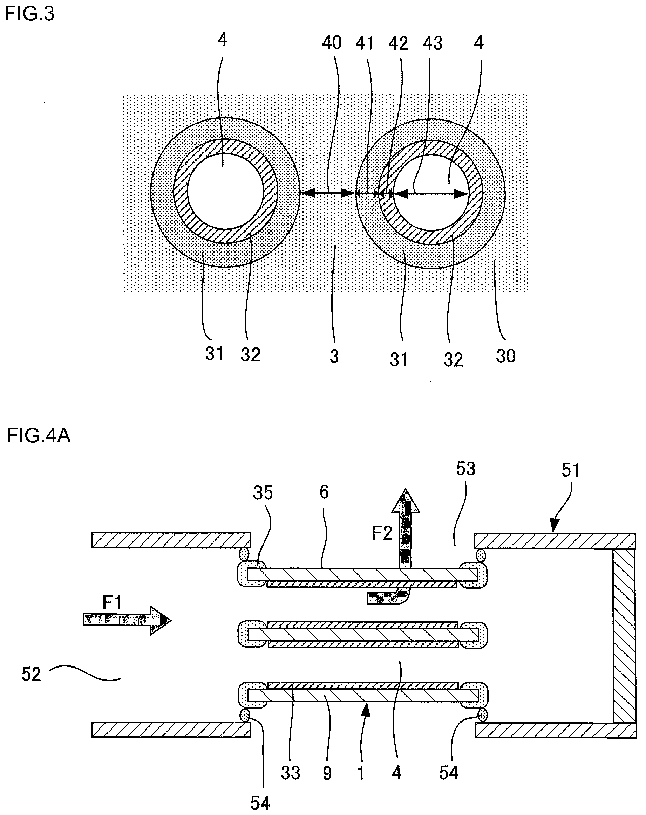

When the sectional shape of the cells 4 of the substrate 30 is circular, a diameter of each of the cells 4 (a cell diameter 43: see Fig. 3) is preferably from 1 to 5 mm. When the diameter is 1 mm or more, the membrane area can sufficiently be maintained. When the diameter is 5 mm or less, a strength of the ceramic filter can sufficiently be maintained.

In the substrate 30, a substrate thickness 40 of the shortest portion between the cells 4 that does not include the intermediate layer 31, the alumina surface layer 32 and the separation layer 33 is preferably 0.49 mm or more and 1.55 mm or less. As shown in Fig. 3, the substrate thickness 40 is a thickness of a fired product of the substrate 30, and a thickness of a portion which does not include the intermediate layer 31, the alumina surface layer 32 and the separation layer 33. The substrate thickness 40 is more preferably 0.51 mm or more and 1.2 mm or less and further preferably 0.65 mm or more and 1.0 mm or less. When the substrate thickness 40 is 0.51 mm or more, a breaking strength can sufficiently be obtained. However, when the substrate thickness 40 is excessively large, the number of the cells which can be disposed in a predetermined volume decreases, and hence a membrane area decreases. In consequence, the permeation flow rate lowers, and hence the substrate thickness is preferably 1.55 mm or less. It is to be noted that when the cells 4 have a circular shape, the substrate thickness 40 is a distance shown in Fig. 3, however when the cells have another shape, the substrate thickness is the shortest distance between the cells 4.

### (Intermediate Layer)

As shown in Fig. 2, the intermediate layer 31 is disposed at the surface of the substrate 30 (the inner wall surface of the separation cell 4a). It is to be noted that in the separation membrane structure 1 according to the present invention, at least one intermediate layer 31 may be present, and an average pore diameter of the intermediate layer 31 positioned in an lower layer than the alumina surface layer 32 is preferably from 0.005 to 2 µm. The average pore diameter is more preferably 0.01 µm or more and 1 µm or less and further preferably 0.05 µm or more and 0.5 µm or less. When the average pore diameter is 0.005 µm or more, a pressure loss can be prevented from being enlarged, and the permeation speed can be prevented from being lowered. When the average pore diameter is 2 µm or less, a strength can be improved, and a long-term reliability of the separation membrane structure 1 deteriorates. Furthermore, the separation layer can be disposed in a small membrane thickness, and the permeation speed can be increased. It is to be noted that the average pore diameter is a value measured from a portion of the intermediate layer 31 which is cut out from the product by the air flow method described in ASTM F316.

When the intermediate layer 31 is constituted of a plurality of layers, the respective intermediate layers 31 are preferably arranged so that the average pore diameter successively decreases from the side of the substrate 30 toward the side of the alumina surface layer 32. Specifically, the intermediate layer is preferably constituted of a first intermediate layer 31a having an average pore diameter of the order of 1 µm and a second intermediate layer 31b having an average pore diameter of the order of 0.1 µm.

A thickness of the intermediate layer 31 (an intermediate layer thickness 41: see Fig. 3) is preferably 150 µm or more and 600 µm or less. When the intermediate layer is constituted of a plurality of layers, the intermediate layer thickness 41 is a total of thicknesses of all the layers. The intermediate layer thickness is more preferably 160 µm or more and 500 µm or less, and further preferably 200 µm or more and 400 µm or less. The thickness is a value judged by the microstructure observation of a cross section of a sample for the observation which is cut out from the product.

A material of the aggregate particles of the intermediate layer 31 is preferably one selected from the group consisting of alumina, titania, mullite, potsherd, and cordierite. Furthermore, the inorganic bonding material of the intermediate layer 31 is preferably one selected from the group consisting of sinterable alumina, silica, glass frit, clay mineral, and sinterable cordierite. The inorganic bonding material is an inorganic component which sinters and solidifies when the bonding material component is adhered (bonded) to the aggregate particles at the temperature at which the aggregate component does not sinter. When alumina is selected as the aggregate component, sinterable alumina has an average particle diameter of 1/10 or less of that of the aggregates. When cordierite is selected as the aggregate component, sinterable cordierite has an average particle diameter of 1/10 or less of that of the aggregates. It is to be noted that the average particle diameter is an average value of 30 longest diameters measured by the microstructure observation of the cross section of the substrate 30, the intermediate layer 31 or the like by the SEM. Furthermore, examples of the clay mineral include kaolin, dolomite, montmorillonite, feldspar, calcite, talc, and mica.

A content ratio of the component of the inorganic bonding material in an inorganic solid content of the intermediate layer 31 is preferably 26 mass% or more and 42 mass% or less. The content ratio is more preferably 28 mass% or more and 42 mass% or less and further preferably 30 mass% or more and 42 mass% or less. It is to be noted that the content ratio (mass%) of the component of the inorganic bonding material in the inorganic solid content = (the inorganic bonding material)/(the aggregate particles + the inorganic bonding material) x 100. The content ratio of the component of the inorganic bonding material in the inorganic solid content is a value measured by EDS.

### (Alumina Surface Layer)

The alumina surface layer 32 is a layer formed by alumina at the outermost surface of the intermediate layer 31, and includes 50 mass% or more of alumina. The porous body 9 includes the alumina surface layer 32, so that a strength of the separation layer 33 formed on the alumina surface layer 32 can be improved.

The alumina surface layer 32 is preferably formed by the alumina particles having an average particle diameter of 0.4 to 3 µm, and more preferably formed by the alumina particles having an average particle diameter of 0.4 to 1.0 µm. The separation performance holding strength can be improved by using the alumina particles having particle diameters of 0.4 µm or more. Membrane forming properties of the separation layer 33 to be formed on the alumina surface layer 32 can be improved by using the alumina particles having particle diameters of 3 µm or less. It is to be noted that the particle diameter of alumina of the alumina surface layer 32 is a value calculated as an average of the longest diameters of 30 alumina particles observed in an electron microscope photograph.

A thickness of the alumina surface layer 32 (a surface layer thickness 42: see Fig. 3) is preferably from 5 to 80 µm and more preferably from 10 to 40 µm. A purity of alumina for use in the alumina surface layer 32 is preferably 90% or more. It is to be noted that a thickness of the alumina surface layer is a value judged from a sectional microstructure photograph.

The alumina surface layer 32 includes a magnesium-based compound. Mg in the magnesium-based compound is included in the alumina surface layer 32 so that (Mg/(Mg + Al)) × 100 is 30 mass% or less, more preferably from 1 to 25 mass%, and most preferably from 2 to 10 mass%. For measurement of a content of Mg, the content is a value calculated from a ratio between Al and Mg by element analysis of EDS, and is an average value of three portions of the surface of a sample. When the alumina surface layer 32 includes the magnesium-based compound, a sinterability improves in a case where the layer is sintered at the same temperature, and the separation performance holding strength improves as compared with the alumina surface layer which does not include the magnesium-based compound. Furthermore, when the content of Mg is 30 mass% or less, a thermal expansion difference from the intermediate layer 31 is reduced, and the generation of the cracks of the alumina surface layer 32 can be prevented.

### (Separation Layer)

The separation layer 33 is provided with a plurality of pores, has a smaller average pore diameter than the porous body 9 (the substrate 30, the intermediate layer 31, and the alumina surface layer 32), and is disposed at the inner wall surface of each of the cells 4 (the surface of each of the partition walls 3). In the ceramic filter of a structure including the separation layer 33 in this manner, a separating function is exerted exclusively by the separation layer 33, and hence the average pore diameter of the porous body 9 can be increased. Therefore, it is possible to decrease a flow resistance when the fluid allowed to permeate the separation layer 33 and moving from the cells 4 into the porous body 9 permeates the porous body 9, and it is possible to improve a fluid permeability.

The average pore diameter of the separation layer 33 can suitably be determined in accordance with a required filtering performance or the required separation performance (particle diameters of a substance to be removed). For example, in the case of the ceramic filter for use in the precise filtration or the ultrafiltration, the average pore diameter is preferably from 0.01 to 1.0 µm. In this case, the average pore diameter of the separation layer 33 is a value measured by the air flow method described in ASTM F316.

As the separation layer 33, a gas separation membrane and a reverse osmosis membrane can be employed. There is not any special restriction on the gas separation membrane, and a known carbon monoxide separation membrane, a helium separation membrane, a hydrogen separation membrane, a carbon membrane, a zeolite membrane, a silica membrane, a titania UF membrane or the like may suitably be selected in accordance with a type of gas to be separated. Examples of the separation layer 33 include a carbon monoxide separation membrane described in JP 4006107, a helium separation membrane described in JP 3953833, a hydrogen separation membrane described in JP 3933907, a carbon membrane described in JP-A-2003-286018, a DDR type zeolite membrane complex described in JP-A-2004-66188, and a silica membrane described in WO 2008/050812.

When the separation layer 33 is the zeolite membrane, a zeolite of a crystal structure such as LTA, MFI, MOR, FER, FAU, DDR or CHA can be utilized as the zeolite. When the separation layer 33 is made of the DDR type zeolite, the layer can be utilized especially as the gas separation membrane for use in selectively separating carbon dioxide.

### (Plugging Portion)

A plugging material to form the plugging portions 8 preferably includes aggregate particles, an inorganic bonding material, a binder, a thickener and a water holding agent. This plugging material can be formed of the same material as in the porous body 9. A porosity of the plugging portions 8 is preferably from 25 to 50%. When the porosity of the plugging portions 8 is in excess of 50%, a solid content included in a slurry for the intermediate layer which is for use in forming the intermediate layer 31 passes through the plugging portions 8 sometimes. On the other hand, when the porosity of the plugging portions 8 is smaller than 20%, it becomes difficult to discharge a water content included in the slurry for the intermediate layer which is for use in forming the intermediate layer 31 sometimes.

### (Glass Seal)

In the separation membrane structure 1 according to the present invention, to prevent a mixed fluid including the permeated separation component from directly flowing into a porous body portion of the end face 2 of the separation membrane structure 1 and flowing outside without being separated by the separation layer 33 formed at the inner wall surface of the predetermined separation cell 4a, a glass seal 35 is preferably further disposed to cover the porous body on the side of the end face 2 into which the mixed fluid of the separation membrane structure 1 flows. There is not any special restriction on a material of the glass seal 35, as long as the material is glass usable as a sealing material for a water treatment filter, however the material is preferably alkali-free glass.

### 2. Separating Method

Next, there will be described a method of separating part of components from a fluid in which a plurality of types of fluids are mixed by using the separation membrane structure 1 of the present embodiment. As shown in Fig. 4A, when the fluid is separated by using the separation membrane structure 1 of the present embodiment, the separation membrane structure 1 is placed in a tubular housing 51 having a fluid inlet 52 and a fluid outlet 53, and a fluid F1 to be treated which is allowed to flow into the fluid inlet 52 of the housing 51 is preferably separated by the separation membrane structure 1. Then, the separated fluid to be treated (a treated fluid F2) is preferably discharged from the fluid outlet 53.

When the separation membrane structure 1 is placed in the housing 51, as shown in Fig. 4A, gaps between the separation membrane structure 1 and the housing 51 are preferably closed with sealing materials 54, 54 in both end portions of the separation membrane structure 1.

All of the fluid F1 to be treated which is allowed to flow from the fluid inlet 52 into the housing 51 flows into the cells 4 of the separation membrane structure 1, and the fluid F1 to be treated which is allowed to flow into the cells 4 permeates the separation layer 33 to penetrate the substrate 30 as the treated fluid F2. Then, the fluid flows outside from the substrate 30 through the outer peripheral surface 6 of the substrate 30 and is discharged from the fluid outlet 53 to the outside (the external space). The fluid F1 to be treated and the treated fluid F2 can be prevented from being mixed by the sealing materials 54, 54.

There is not any special restriction on a material of the housing 51, however an example of the material is a stainless steel. Furthermore, there is not any special restriction on the sealing material 54, however an example of the sealing material is an O-ring. Furthermore, examples of the sealing material 54 include fluorine rubber, silicone rubber, and ethylene propylene rubber. These materials are also suitable for use at a high temperature for a long time.

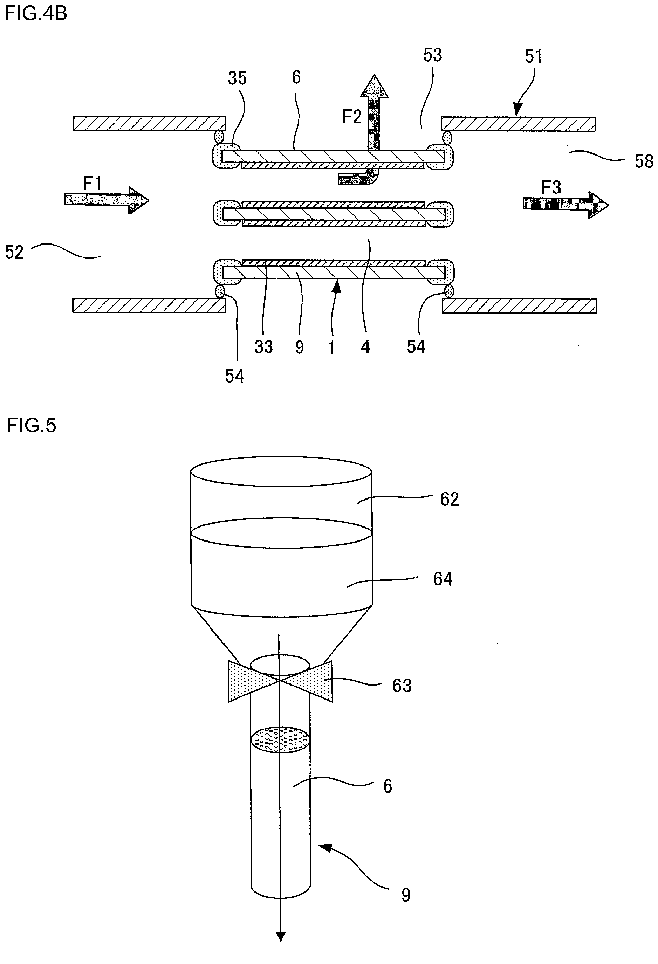

Fig. 4B shows another embodiment in which a separation membrane structure 1 is attached to a housing 51. As shown in Fig. 4B, the separation membrane structure 1 is placed in the tubular housing 51 having a fluid inlet 52 and fluid outlets 53, 58. In this embodiment, a fluid F1 to be treated which is allowed to flow from the fluid inlet 52 of the housing 51 is separated by the separation membrane structure 1, the separated fluid to be treated (a treated fluid F2) can be discharged from the fluid outlet 53, and a remainder (a fluid F3) can be discharged from the fluid outlet 58. The fluid F3 can be discharged from the fluid outlet 58. Therefore, an operation can be performed at a high flow speed of the fluid F1 to be treated, and a permeation flow speed of the treated fluid F2 can be increased. In general, a deposited layer of a cut component is formed in a membrane surface of a filter, and hence a permeation amount of the treated fluid F2 decreases. Furthermore, by concentration polarization where a concentration of a component which does not permeate the membrane even in gas separation increases, the permeation amount of the treated fluid F2 decreases. However, when the flow speed of the fluid F1 to be treated is high, the cut component flows to the fluid outlet 58. Therefore, the formation of the deposited layer or the concentration polarization is alleviated, and the separation membrane structure is not easily clogged.

### 3. Manufacturing Method

### (Substrate)

Next, a manufacturing method for the separation membrane structure 1 according to the present invention will be described. First, a raw material of the porous body is formed. For example, the raw material is extruded by using a vacuum extrusion machine. In consequence, the honeycomb shaped unfired substrate 30 having the separation cells 4a and the water collecting cells 4b is obtained. In addition, press molding, cast molding and the like are present and are suitably selectable.

Then, in the obtained unfired substrate 30, the discharge through channels 7 are formed each of which passes from one region of the outer peripheral surface 6 through the water collecting cell 4b to communicate with another region.

Next, the plugging material of a slurry state is charged into a space reaching the discharge through channels 7 from both the end faces 2a, 2b of the water collecting cells 4b of the unfired substrate 30 with the obtained discharge through channels 7. Furthermore, the unfired substrate 30 into which the plugging material is charged is fired at, for example, 900 to 1450°C.

### (Intermediate Layer)

Furthermore, the plurality of intermediate layers 31 are formed at the inner wall surfaces of the separation cells 4a of the substrate 30. To form the intermediate layer 31 (to form the membrane), the slurry for the intermediate layer is first prepared. The slurry for the intermediate layer can be prepared by adding water to the same material as in the substrate 30, a ceramic raw material such as alumina, mullite, titania or cordierite having desirable particle diameters (e.g., an average particle diameter of 3.2 µm). Furthermore, the inorganic bonding material is added to this intermediate layer slurry to improve a membrane strength after the sintering. As the inorganic bonding material, clay, kaolin, titania sol, silica sol, glass frit or the like is usable. This slurry for the intermediate layer is adhered to the inner wall surfaces of the separation cells 4a, dried and sintered at, for example, 900 to 1450°C to form the intermediate layer 31 (by use of a device described in, e.g., JP-A-S61-238315).

For the intermediate layer 31, a plurality of separate layers can be formed by using a plurality of types of slurries in which the average particle diameters are varied. The second intermediate layer 31b is disposed on the first intermediate layer 31a, so that it is possible to decrease an influence of unevenness of the surface of the porous body 9.

### (Surface Layer)

Next, the alumina surface layer 32 is formed on the intermediate layer 31. To form the alumina surface layer 32 (to form the membrane), a slurry for the alumina surface layer is first prepared. The slurry for the alumina surface layer can be prepared by dispersing alumina particulates in a dispersion solvent such as water, and adding a sintering auxiliary agent, an organic binder, a pH regulator, a surfactant or the like as needed. Then, in a membrane forming step, this slurry for the alumina surface layer is allowed to flow down on the surface of the porous body 9 by its own weight, whereby the alumina surface layer 32 can be formed. Alternatively, the slurry for the alumina surface layer is allowed to pass through the cells 4 and is sucked from the outside of the porous body 9 by a pump or the like, whereby the alumina surface layer 32 can be formed. Next, the alumina surface layer 32 is dried in a drier. Alternatively, forced-air drying is performed. Especially, when the slurry for the alumina surface layer to which the magnesium-based compound is added is used, a forced-air drying step is preferably included. The air is passed through the surface of the porous body 9 to which the slurry for the alumina surface layer is adhered, whereby a drying speed of the surface of the porous body 9 increases. Furthermore, magnesium ions can be moved and easily collected on the surface together with movement of a liquid when the liquid is evaporated. Next, the alumina surface layer 32 is fired. The alumina surface layer 32 is preferably formed by performing the firing at 1150 to 1450°C. When the firing is performed at 1150°C or more, alumina can be sintered so that a strength is sufficiently obtained. Furthermore, when the firing temperature is 1450°C or less, pores of alumina are not closed however a sufficient gas permeation amount can be obtained. When the alumina surface layer 32 contains an Mg component, for example, MgCl₂, MgCO₃, Mg(CH₃COO)₂, MgSO₄, Mg(NO₃)₂, Mg(OH)₂ or the like can be added.

### (Separation Layer)

### (Zeolite Membrane)

Next, the separation layer 33 is formed on the alumina surface layer 32. A case where the zeolite membrane is disposed as the separation layer 33 will be described. A manufacturing method of the zeolite membrane includes a particle adhering step and a membrane forming step. In the particle adhering step, a slurry in which zeolite particles that become seeds are dispersed is allowed to flow down on the surface of the porous body 9 by its own weight to adhere the zeolite particles to the porous body 9. In the membrane forming step, the porous body 9 to which the zeolite particles are adhered is immersed into a sol to carry out hydrothermal synthesis, thereby forming the zeolite membrane on the porous body 9. The flow-down in the particle adhering step is to allow the slurry to freely drop down on the porous body 9 by its own weight, whereby the slurry flows on the surface of the porous body 9. In a flow-down method, for example, the slurry is poured into a hole of the porous body 9 in which the hole is made in a cylindrical shape, thereby allowing a large amount of liquid to flow in parallel with the surface. In this case, the slurry allowed to flow down flows through the surface of the porous body 9 by its own weight. Therefore, less slurry penetrates into the porous body 9. On the other hand, a heretofore known dripping method is, for example, a method of dripping a small amount of a slurry vertically onto a flat plate, and the dripped slurry penetrates into the flat plate by its own weight. Therefore, a membrane thickness increases.

### [1] Preparation of Seeding Slurry Liquid/Seeding

### (Particle Adhering Step)

DDR type zeolite crystal powder is manufactured, and this powder is used as it is, or ground as needed for use as seed crystals. The DDR type zeolite powder (this becomes the seed crystals) is dispersed in a solvent to form a slurry 64 (a seeding slurry liquid). The seeding slurry liquid is preferably diluted with the solvent so that a concentration of a solid content included in this liquid is 1 mass% or less. As the solvent for dilution, water, ethanol, or ethanol aqueous solution is preferable. As the solvent for use in dilution, except for water or ethanol, an organic solvent such as acetone or IPA, or an organic solvent aqueous solution is usable. By the use of the organic solvent having a high volatility, a drying time can be shortened, and simultaneously, a penetrating amount of the seeding slurry 64 can be decreased, so that it is possible to form a thinner zeolite membrane. As a method of dispersing the DDR type zeolite powder in the slurry liquid, a general stirring method may be employed and a method of an ultrasonic treatment or the like may be employed.

Fig. 5 shows one embodiment of the seeding (the particle adhering step) by the flow-down method. The porous body 9 is anchored to a lower end of a wide-mouthed funnel 62, and by opening a cock 63, the seeding slurry 64 is poured from the upside of the porous body 9 and passed through the cells 4, whereby the particle adhering step can be performed.

A concentration of a solid content in the seeding (particle adhering step) slurry 64 is preferably in a range of 0.00001 to 1 mass%, more preferably in a range of 0.0001 to 0.5 mass%, and further preferably in a range of 0.0005 to 0.2 mass%. When the concentration is smaller than a lower limit value of the concentration range, the number of steps increases to cause cost increase. Furthermore, when the concentration is in excess of 1 mass%, a thick zeolite particle layer is formed on the surface of the porous body 9, and a thick membrane is formed to cause a low flux.

In the particle adhering step, a step (Fig. 5) of allowing to flow down the slurry 64 including the zeolite particles that become the seeds is preferably performed a plurality of times. The plurality of times is about twice to ten times. When the step is performed the plurality of times, the zeolite particles can evenly be adhered to the whole surface of the porous body 9.

The manufacturing method of the zeolite membrane preferably includes the forced-air drying step after the slurry 64 including the zeolite particles that become the seeds is allowed to flow down. The forced-air drying is to pass air through the surface of the porous body 9 to which the slurry 64 including the zeolite particles is adhered, thereby drying the slurry 64. When the forced-air drying is performed, a drying speed increases, and the zeolite particles can be moved and easily collected on the surface together with the movement of the liquid when the liquid is evaporated.

Furthermore, the forced-air drying is preferably performed with humidified air. When the forced-air drying is performed with the humidified air, the seeds can more strongly be anchored onto the porous body 9. The seeds are strongly anchored onto the porous body 9, so that it is possible to prevent detachment of the zeolite particles during the subsequent hydrothermal synthesis and it is possible to stably prepare the zeolite membrane having less defects. It is to be noted that a similar effect can be obtained also by including an exposure step of exposing, in water vapor after the forced-air drying, the porous body 9 dried with the forced air which is not humidified after the slurry 64 is allowed to flow down for the seeding.

### [2] Preparation of Raw Material Solution (Sol)

Next, there is prepared a raw material solution including 1-adamantaneamine dissolved in ethylenediamine and having a predetermined composition.

1-adamantaneamine is an SDA (a structure directing agent) in synthesis of the DDR type zeolite, i.e., a substance that becomes a mold to form a crystal structure of the DDR type zeolite, and hence a molar ratio to SiO₂ (silica) that is a raw material of the DDR type zeolite is important. The 1-adamantaneamine/SiO₂ molar ratio needs to be in a range of 0.002 to 0.5, preferably in a range of 0.002 to 0.2, and further preferably in a range of 0.002 to 0.03. When the 1-adamantaneamine/SiO₂ molar ratio is smaller than this range, 1-adamantaneamine as SDA is running short, and it is difficult to form the DDR type zeolite. On the other hand, when the ratio is in excess of this range, expensive 1-adamantaneamine is disadvantageously added more than necessary, which is unfavorable from the aspect of manufacturing cost.

1-adamantaneamine is not easily soluble in water that is a solvent of the hydrothermal synthesis, and is therefore dissolved in ethylenediamine and then used for the preparation of the raw material solution. 1-adamantaneamine is completely dissolved in ethylenediamine to prepare the raw material solution of a uniform state, whereby the DDR type zeolite having a uniform crystal size can be formed. An ethylenediamine/1-adamantaneamine molar ratio needs to be in a range of 4 to 35, preferably in a range of 8 to 24, and further preferably in a range of 10 to 20. When the ethylenediamine/1-adamantaneamine molar ratio is smaller than this range, an amount of ethylenediamine to completely dissolve 1-adamantaneamine is not sufficiently obtained, however when the ratio is in excess of this range, ethylenediamine is disadvantageously used more than necessary, which is unfavorable from the aspect of manufacturing cost.

In the manufacturing method of the present invention, colloidal silica is used as a silica source. As colloidal silica, commercially available colloidal silica can suitably be used, however colloidal silica can be prepared by dissolving fine powder silica in water or by hydrolysis of alkoxide.

A molar ratio (a water/SiO₂ molar ratio) between water and SiO₂ (silica) included in the raw material solution needs to be in a range of 10 to 500, preferably in a range of 14 to 250, and further preferably in a range of 14 to 112. When the water/SiO₂ molar ratio is smaller than this range, a concentration of SiO₂ in the raw material solution is excessively high, which is unfavorable in that a large amount of unreacted SiO₂ which is not crystallized remains. On the other hand, when the ratio is in excess of this range, the concentration of SiO₂ in the raw material solution is excessively low, which is unfavorable in that the DDR type zeolite cannot be formed.

According to the manufacturing method of the present invention, in addition to all silica type of DDR type zeolite, DDR type zeolite including aluminum and metal cations in a framework (hereinafter described as "a low silica type of DDR type zeolite") can be manufactured. This low silica type of DDR type zeolite has cations in pores, and is different from all silica type of DDR type zeolite in an adsorption performance or a catalyst performance. When the low silica type of DDR type zeolite is manufactured, an aluminum source and a cation source are added in addition to water as the solvent and colloidal silica as the silica source, to prepare the raw material solution.

As the aluminum source, aluminum sulfate, sodium aluminate, metal aluminum or the like is usable. An SiO₂/Al₂O₃ molar ratio in a case where aluminum is converted as an oxide needs to be in a range of 50 to 1000, preferably in a range of 70 to 300, and further preferably in a range of 90 to 200. When the SiO₂/Al₂O₃ molar ratio is smaller than this range, a ratio of amorphous SiO₂ other than the DDR type zeolite is unfavorably large. On the other hand, when the molar ratio is in excess of this range, the DDR type zeolite can be manufactured. However, an amount of aluminum and an amount of the cations remarkably decrease, and hence characteristics of the low silica type of DDR type zeolite cannot be exerted, which is unfavorable in that there is not any difference between this type of zeolite and the all silica type of zeolite.

Examples of the cations include cations of an alkali metal, i.e., one of K, Na, Li, Rb and Cs. For a cation source, the example of Na is described. Examples of the cation source include sodium hydroxide and sodium aluminate. An X₂O/Al₂O₃ molar ratio in a case where the alkali metal is converted as an oxide needs to be in a range of 1 to 25, preferably in a range of 3 to 20, and further preferably in a range of 6 to 15. When the X₂O/Al₂O₃ molar ratio is smaller than this range, the DDR type zeolite of a desired SiO₂/Al₂O₃ molar ratio is unfavorably not easily obtained, and when the molar ratio is in excess of this range, amorphous SiO₂ unfavorably is mixed in a product.

The preparation of the raw material solution has been described above, however an example of an especially preferable mode is a method in which a solution obtained by dissolving 1-adamantaneamine in ethylenediamine, water that is the solvent and colloidal silica (when the low silica type of DDR is synthesized, further, aluminum sulfate that is the aluminum source and sodium hydroxide as the cation source) are mixed at a predetermined ratio and dissolved, to prepare the raw material solution.

### [3] Membrane Formation (Membrane Forming Step)

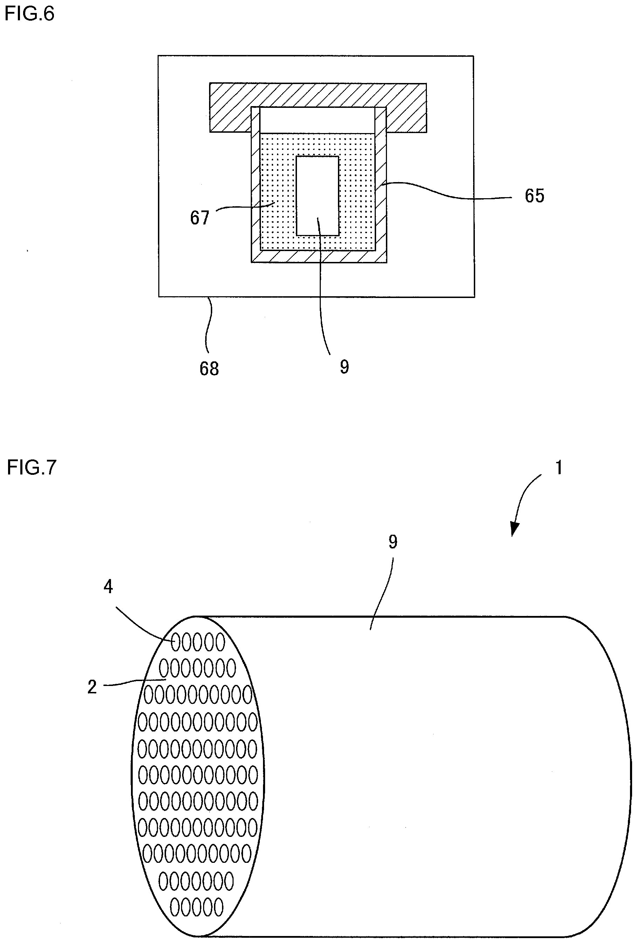

A container (e.g., a wide-mouthed bottle) in which the raw material solution is contained is set to a homogenizer to stir the solution, thereby obtaining a sol 67 for use in hydrothermal synthesis. Next, as shown in Fig. 6, the porous body 9 seeded by the flow-down method is placed in a pressure-resistant container 65, and the prepared sol 67 is further placed. Afterward, this container is placed in a drier 68, and a heating treatment (the hydrothermal synthesis) is performed at 110 to 200°C for 16 to 120 hours, thereby manufacturing the zeolite membrane.

A temperature (a synthesis temperature) of the heating treatment is preferably in a range of 110 to 200°C, further preferably in a range of 120 to 180°C, and especially preferably in a range of 120 to 170°C. When the temperature of the heating treatment is smaller than this range, the DDR type zeolite unfavorably cannot be formed, and when the temperature is in excess of this range, a DOH type zeolite that is not a desired substance is unfavorably formed by phase transition.

As a time of the heating treatment (a synthesis time), a remarkably short time of several hours to five days is sufficient. In the manufacturing method of the present invention, the DDR type zeolite powder is added to the substrate by the flow-down method, and hence crystallization of the DDR type zeolite is promoted.

In this manufacturing method, the raw material solution (the sol 67) does not have to be always stirred during the heating treatment. This is because 1-adamantaneamine to be included in the raw material solution is dissolved in ethylenediamine and hence the raw material solution is held in the uniform state. It is to be noted that in a conventional method, when the raw material solution is not always stirred, mixed crystals of DDR and DOH are disadvantageously formed sometimes, however according to the manufacturing method of the present invention, even when the raw material solution is not always stirred, DOH is not formed, and single-phase crystals of DDR can be formed.

### [4] Washing/Structure Directing Agent Removal

Next, the porous body 9 provided with the zeolite membrane is washed with water or washed in warm water of 80 to 100°C, taken out and dried at 80 to 100°C. Then, the porous body 9 is placed in an electric furnace and heated at 400 to 800°C in the atmosphere for 1 to 200 hours, thereby burning and removing 1-adamantaneamine in the pores of the zeolite membrane. As described above, it is possible to form the zeolite membrane having less defects and a smaller and more uniform membrane thickness of 10 µm or less than before.

The manufacturing method of the zeolite membrane can be applied to a zeolite of a crystal structure of LTA, MFI, MOR, FER, FAU, DDR or CHA.

### (Silica Membrane)

Next, there will be described a case where a silica membrane is disposed as the separation layer 33 on the alumina surface layer 32. A precursor solution (a silica sol liquid) that becomes the silica membrane can be prepared by hydrolyzing tetraethoxysilane in the presence of nitric acid to form a sol liquid and diluting the sol liquid with ethanol. Furthermore, the sol liquid can be diluted with water in place of ethanol. Then, the precursor solution (the silica sol liquid) that becomes the silica membrane is poured from the upside of the porous body 9, and passed through the separation cells 4a, or the precursor solution is adhered to the inner wall surfaces of the separation cells 4a by commonly used dipping. Afterward, the temperature is raised by 100°C/hour, held at 500°C for one hour, and lowered by 100°C/hour. Such pouring, drying, temperature raising and temperature lowering operation is repeated three to five times, whereby the silica membrane can be disposed. As described above, the separation membrane structure 1 in which the separation layer 33 is the silica membrane can be obtained.

### (Carbon Membrane)

Next, there will be described a case where the carbon membrane is disposed as the separation layer 33 on the alumina surface layer 32. In this case, the precursor solution that becomes the carbon membrane may be brought into contact with the surface of the porous body 9 by means such as dip coating, an immersing method, spin coating or spray coating, to form the membrane. When a thermosetting resin such as phenol resin, melamine resin, urea resin, furan resin, polyimide resin or epoxy resin, a thermoplastic resin such as polyethylene, a cellulose-based resin or a precursor substance of such resin is mixed and dissolved in an organic solvent such as methanol, acetone, tetrahydrofuran, NMP or toluene, water or the like, the precursor solution can be obtained. When the precursor solution is formed into the membrane, a heat treatment may suitably be applied in accordance with a type of resin included in the precursor solution. The precursor membrane obtained in this manner is carbonized to obtain the carbon membrane.

It is to be noted that as the separation membrane structure 1, there has been described the embodiment in which the end faces 2 are plugged with the plugging material to form the plugging portions 8, and the separation cells 4a, the water collecting cells 4b and the discharge through channels 7 are disposed. However, as shown in Fig. 7, the structure may be constituted so that the end faces are not plugged, however the separation layers 33 may be disposed in all the cells 4 of the honeycomb shaped porous body 9, and the water collecting cells 4b and the discharge through channels 7 are not disposed.

### Examples

Hereinafter, the present invention will be described in more detail on the basis of examples, however the present invention is not limited to these examples.

Examples 1-14, 17 and 18 are not according to the invention.

### (Substrate)

20 parts by mass of a sintering auxiliary agent (an inorganic bonding material) was added to 100 parts by mass of alumina particles (aggregate particles) having an average particle diameter of 50 µm, and water, a dispersing agent and a thickener were further added, mixed and kneaded to prepare a kneaded material. The obtained kneaded material was extruded to prepare a honeycomb shaped unfired substrate 30.

For the sintering auxiliary agent (the inorganic bonding material), there were used a glass raw material containing SiO₂ (80 mol%), Al₂O₃ (10 mol%) and alkaline earth (8 mol%) and molten at 1600°C, homogenized, cooled and then ground into an average particle diameter of 1 µm, and titania having an average particle diameter of 0.1 to 1.0 µm (for the substrate in which the inorganic bonding material was used, see Table 1).

In the unfired substrate 30, there were formed discharge through channels 7 each of which passed from one region of an outer peripheral surface 6 through a water collecting cell 4b to communicate with another region.

Next, a plugging material of a slurry state was charged into a space reaching the discharge through channels 7 from both end faces 2a, 2b of the substrate 30. Then, the substrate 30 was fired. For firing conditions, the firing was performed at 1250°C for one hour, and each of a temperature raising speed and a temperature lowering speed was set to 100°C/hour.

### (Intermediate Layer)

Next, on inner wall surfaces of cells 4 of the substrate 30, an intermediate layer 31 formed of an alumina porous body having a thickness of 150 µm and an average pore diameter of 0.5 µm was formed (the intermediate layer 31 included only one layer). The average pore diameter is a value measured by an air flow method described in ASTM F316.

First, to 100 parts by mass of alumina particles (aggregate particles) having an average particle diameter of 3 µm, 14 parts by mass of a sintering auxiliary agent was added, and water, a dispersing agent and a thickener were further added and mixed to prepare a slurry. The slurry was used to form the intermediate layer 31 on an inner peripheral surface of the substrate 30 by a filtration membrane forming method described in JP-B-S63-66566. Afterward, the firing was performed in an electric furnace under the air atmosphere to form the intermediate layer 31, whereby a porous body 9 was obtained. For firing conditions, the firing was performed at 950°C for one hour, and each of a temperature raising speed and a temperature lowering speed was set to 100°C/hour. Additionally, for the sintering auxiliary agent, there was used a glass raw material containing SiO₂ (77 mol%), ZrO₂ (10 mol%), Li₂O (3.5 mol%), Na₂O (4 mol%), K₂O (4 mol%), CaO (0.7 mol%) and MgO (0.8 mol%) and molten at 1600°C, homogenized, cooled and then ground in an average particle diameter of 1 µm, or as the sintering auxiliary agent (the inorganic bonding material), titania was used (for the intermediate layer in which the inorganic bonding material was used, see Table 1).

### (Alumina Surface Layer)

Next, an alumina surface layer 32 having a thickness of 15 µm and an average particle diameter of 0.4 µm was formed. A manufacturing method will be described. First, the alumina surface layer 32 was formed on the surface of the intermediate layer 31 by a filtration membrane forming method by use of an alumina-containing slurry for an alumina surface layer (Examples 1 to 22). Drying was performed in a drier, or forced-air drying was performed. Next, the alumina surface layer 32 was fired at 1150 to 1450°C to be formed. A particle diameter of alumina of the alumina surface layer 32 was calculated as an average of 30 longest diameters of alumina particles of the surface of a sample observed by an electron microscope photograph (an observation magnification of 10000 to 20000 times). Furthermore, there were also formed examples to each of which MgCl₂, MgCO₃ or Mg(CH₃COO)₂ was added as a surface layer auxiliary agent (Examples 15, 16 and 19 to 22). Additionally, for a percentage of Mg to be included ((Mg/(Mg + Al)) × 100), element analysis was performed by EDS. Furthermore, there were also formed examples in each of which the surface layer was not the alumina surface layer 32, but was made of titania (Comparative Examples 1 to 3).

For the porous body 9, an outer shape was columnar, an outer diameter thereof was 30 mm, a length (a total length) in a central axis direction was 160 mm, a cell diameter was 2.5 mm, and the number of the cells was 55 (Examples 1 to 18 and 20 to 22 and Comparative Examples 1 to 3). Example 19 was a large-sized porous body 9 in which an outer diameter was 180 mm, a length (a total length) in the central axis direction was 1000 mm, a cell diameter was 2.5 mm, and the number of the cells was 2050.

### (Formation of Glass Seal)

Next, glass seals 35 were disposed in both the end faces 2a, 2b of the substrate 30 in a state where open ends of the cells 4 were not closed.

### (Formation of DDR Membrane)

A DDR membrane was formed as a separation layer 33 on the alumina surface layer 32.

### (1) Preparation of Seed Crystals

On the basis of a method of manufacturing a DDR type zeolite described in M. J. den Exter, J. C. Jansen, H. van Bekkum, Studies in Surface Science and Catalysis vol. 84, Ed. by J. Weitkamp et al., Elsevier (1994) 1159 to 1166, or JP-A-2004-083375, DDR type zeolite crystal powder was manufactured, and this powder was used as it was, or ground as needed for use as seed crystals. The synthesized or ground seed crystals were dispersed in water, and then coarse particles were removed, to prepare a seed crystal dispersion liquid.

### (2) Seeding (Particle Adhering Step)

The seed crystal dispersion liquid prepared in (1) was diluted with ion-exchanged water or ethanol and regulated so that a DDR concentration was from 0.001 to 0.36 mass% (a concentration of a solid content in a slurry 64), and the dispersion liquid was stirred at 300 rpm by a stirrer to obtain a seeding slurry liquid (the slurry 64). The porous body 9 which was porous was anchored to a lower end of a wide-mouthed funnel 62, and 160 ml of a seeding slurry liquid was poured from the upside of the porous body 9 and passed through the cells (see Fig. 5). In the porous body 9 in which the slurry 64 was allowed to flow down, the insides of the cells were subjected to forced-air drying at room temperature or 80°C and at an air speed of 3 to 6 m/s for 10 to 30 minutes. The flow-down of the slurry 64 and the forced-air drying were repeated once to six times to obtain a sample. After the drying, microstructure observation by an electron microscope was carried out. It was confirmed that DDR particles were adhered to the surface of the porous body 9.

### (3) Membrane Formation (Membrane Forming Step)

7.35 g of ethylenediamine (manufactured by Wako Pure Chemical Industries, Ltd.) was placed into a 100 ml wide-mouthed bottle made of fluororesin, and then 1.156 g of 1-adamantaneamine (manufactured by Aldrich Co.) was added and dissolved so that no precipitate of 1-adamantaneamine was left. 98.0 g of 30 mass% colloidal silica (Snowtex S manufactured by Nissan Chemical Industries, Ltd.) and 116.55 g of ion-exchanged water were placed into another container and lightly stirred. Afterward, this was added to the wide-mouthed bottle in which ethylenediamine and 1-adamantaneamine were mixed, and strongly shaken to prepare a raw material solution. Molar ratios of the respective components of the raw material solution were 1-adamantaneamine/SiO₂ = 0.016 and water/SiO₂ = 21. Afterward, the wide-mouthed bottle containing the raw material solution was set to a homogenizer and stirred for one hour. The porous body 9 to which the DDR particles were adhered in (2) was disposed in a stainless steel pressure-resistant container 65 with an inner cylinder having an inner capacity of 300 ml and made of fluororesin, and the prepared raw material solution (a sol 67) was placed, to perform a heating treatment (hydrothermal synthesis) at 140°C for 50 hours (see Fig. 6). Additionally, during the hydrothermal synthesis, the solution was alkaline by raw materials of colloidal silica and ethylenediamine. When a broken surface of the porous body 9 on which the membrane was formed was observed by a scanning type electron microscope, a membrane thickness of the DDR membrane was 10 µm or less.

### (4) Structure Directing Agent Removal

The membrane which could be coated was heated by an electric furnace at 450 or 500°C in the air for 50 hours, to burn and remove 1-adamantaneamine in the pores. By X-ray diffraction, a crystal phase was identified and a DDR type zeolite was confirmed. Furthermore, after the membrane formation, it was confirmed that the porous body 9 was coated with the DDR type zeolite.

### (Formation of Silica Membrane)

A silica membrane was formed as a separation layer on the alumina surface layer 32. A precursor solution (a silica sol liquid) that became the silica membrane was prepared by hydrolyzing tetraethoxysilane in the presence of nitric acid to form a sol liquid and diluting the sol liquid with ethanol. The precursor solution (the silica sol liquid) that became the silica membrane was poured from the upside of the porous body 9 in which the alumina surface layer 32 was formed, and passed through the separation cells 4a, and the precursor solution was adhered to the inner wall surfaces of separation cells 4a. Afterward, the temperature was raised by 100°C/hour, held at 500°C for one hour, and lowered by 100°C/hour. Such pouring, drying, temperature raising and temperature lowering operation was repeated three to five times, whereby the silica membrane was disposed.

### (Formation of Carbon Membrane)

A carbon membrane was formed as the separation layer on the alumina surface layer 32. A phenol resin was mixed and dissolved in an organic solvent to obtain a precursor solution. The precursor solution that became the carbon membrane was brought into contact with the surface of the porous body 9 by dip coating, to form the membrane. Afterward, a heat treatment at 300°C was performed for one hour to apply polyimide resin as a precursor of the carbon membrane on the surface. Then, the substrate provided with the obtained polyimide resin layer was subjected to a heat treatment at 600°C in a non-oxidizing atmosphere for five hours to obtain the carbon membrane.

As shown in Fig. 4A, a separation membrane structure 1 was placed in a tubular housing 51 having a fluid inlet 52 and a fluid outlet 53, and water was allowed to flow into the fluid inlet 52 of the housing 51 to pressurize the structure at 3 MPa by the water. Afterward, drying was performed in a drier, and a separation coefficient was measured in a system shown in Fig. 4B. Furthermore, an operation of increasing a water pressure of the pressurizing every 1 MPa to measure the separation coefficient was repeated, and a separation performance holding strength was checked.

**[Table 1]**

| | Substrate | Intermediate layer | Surface layer | | | | Firing | | Separation layer | Separation performance holding strength (MPa) | Ratio of separation performance after 6 MPa pressurizing | Ratio of gas allowed to permeate defect after 6 MPa pressurizing |
|---|---|---|---|---|---|---|---|---|---|---|---|---|
| | Inorganic bonding material | Inorganic bonding material | Material | Particle dia. (µm) | Surface layer auxiliary agent | (Mg/(Mg+Al))×100 (Element analysis by EDS) | Firing temp. of intermediate layer (°C) | Firing temp. of surface layer (°C) | | | | |
| Comparative Example 1 | Present (glass) | Present (glass) | Titania | 0.5 | None | - | 1050 | 1050 | DDR | 5 | 0.6 | 1.6 |
| Comparative Example 2 | Present (glass) | Present (glass) | Titania | 0.5 | None | - | 1150 | 1150 | DDR | 5 | 0.4 | 2.6 |
| Comparative Example 3 | Present (glass) | Present (glass) | Titania | 0.5 | None | - | 1250 | 1250 | DDR | 5 | 0.4 | 2.3 |
| Example 1 | Present (glass) | Present (glass) | Alumina | 0.2 | None | - | 1250 | 1250 | DDR | 7 | 1.0 | 1.0 |
| Example 2 | Present (glass) | None | Alumina | 0.2 | None | - | 1350 | 1350 | DDR | 7 | 1.0 | 1.0 |
| Example 3 | Present (glass) | None | Alumina | 1 | None | - | 1350 | 1350 | DDR | 17 | 1.0 | 1.0 |
| Example 4 | Present (glass) | None | Alumina | 3 | None | - | 1350 | 1350 | DDR | 10 | 1.0 | 1.0 |
| Example 5 | Present (glass) | None | Alumina | 6 | None | - | 1350 | 1350 | DDR | 8 | 1.0 | 1.0 |
| Example 6 | Present (glass) | Present (glass) | Alumina | 0.4 | None | - | 1050 | 1050 | DDR | 6 | 1.0 | 1.0 |
| Example 7 | Present (glass) | Present (glass) | Alumina | 0.4 | None | - | 1150 | 1150 | DDR | 12 | 1.0 | 1.0 |
| Example 8 | Present (glass) | Present (titania) | Alumina | 0.4 | None | - | 1250 | 1250 | DDR | 16 | 1.0 | 1.0 |
| Example 9 | Present (glass) | Present (titania) | Alumina | 0.4 | None | - | 1250 | 1350 | DDR | 18 | 1.0 | 1.0 |
| Example 10 | Present (glass) | Present (titania) | Alumina | 0.4 | None | - | 1250 | 1450 | DDR | 16 | 1.0 | 1.0 |
| Example 11 | Present (glass) | Present (titania) | Alumina | 0.4 | None | - | 1250 | 1550 | DDR | 18 | 1.0 | 1.0 |
| Example 12 | None | None | Alumina | 0.4 | None | - | 1400 | 1350 | DDR | 18 | 1.0 | 1.0 |
| Example 13 | None | None | Alumina | 0.4 | None | - | 1400 | 1450 | DDR | 16 | 1.0 | 1.0 |
| Example 14 | None | None | Alumina | 0.4 | None | - | 1400 | 1550 | DDR | 18 | 1.0 | 1.0 |
| Example 15 | Present (glass) | Present (titania) | Alumina | 0.4 | MgCl₂ | 2.5 | 1250 | 1250 | DDR | 18 | 1.0 | 1.0 |
| Example 16 | Present (glass) | Present (titania) | Alumina | 0.4 | MgCO₃ | 5.6 | 1250 | 1250 | DDR | 18 | 1.0 | 1.0 |
| Example 17 | Present (glass) | Present (titania) | Alumina | 0.4 | None | - | 1250 | 1250 | Silica | 14 | 1.0 | 1.0 |
| Example 18 | Present (glass) | Present (titania) | Alumina | 0.4 | None | - | 1250 | 1250 | Carbon | 16 | 1.0 | 1.0 |
| Example 19 | Present (glass) | Present (titania) | Alumina | 0.4 | Mg(CH₃COO)₂ | 0.9 | 1250 | 1250 | DDR | 17 | 1.0 | 1.0 |
| Example 20 | Present (glass) | Present (titania) | Alumina | 0.4 | Mg(CH₃COO)₂ | 2.0 | 1250 | 1250 | DDR | 18 | 1.0 | 1.0 |
| Example 21 | Present (glass) | Present (titania) | Alumina | 0.4 | Mg(CH₃COO)₂ | 10.9 | 1250 | 1250 | DDR | 17 | 1.0 | 1.0 |
| Example 22 | Present (glass) | Present (titania) | Alumina | 0.4 | Mg(CH₃COO)₂ | 26.8 | 1250 | 1250 | DDR | 16 | 1.0 | 1.0 |

**[Table 2]**

| | Firing temp. of surface layer (°C) | Separation performance holding strength (MPa) | CO₂ permeation amount (L/min•m²) |
|---|---|---|---|
| Example 6 | 1050 | 6 | 100 |
| Example 7 | 1150 | 12 | 100 |
| Example 8 | 1250 | 16 | 90 |
| Example 9 | 1350 | 18 | 80 |
| Example 10 | 1450 | 16 | 35 |
| Example 11 | 1550 | 18 | 5 |

### (CO₂ Permeation Amount Measurement and Separation Performance)

When the separation layer 33 was the DDR membrane, the separation coefficient was obtained as follows. A mixed gas of carbon dioxide (CO₂) and methane (CH₄) (a volume ratio of the respective gases was 50:50 and a partial pressure of each gas was 0.2 MPa) was introduced into the cells 4 of the separation membrane structure 1, and a permeation flow rate of a CO₂ gas allowed to permeate the separation layer 33 was measured by a mass flowmeter to calculate the CO₂ permeation amount (Table 2). The CO₂ permeation amount indicates a treatment performance of the CO₂ gas of the separation layer 33. The larger the CO₂ permeation amount is, the larger a treatment capacity is. Therefore, the separation membrane has a high performance.

Furthermore, the gas allowed to permeate the separation layer 33 was collected, component analysis was performed by using a gas chromatograph, and a separation coefficient was calculated by an equation of "the separation coefficient α = (permeated CO₂ concentration/permeated CH₄ concentration)/(supplied CO₂ concentration/supplied CH₄ concentration)".

When the separation layer 33 was the carbon membrane or the silica membrane, the separation coefficient was obtained as follows. A mixed liquid of water and ethanol was introduced into the cells 4 of the separation membrane structure 1, a liquid allowed to permeate the separation layer 33 was collected, and the component analysis was performed by using the gas chromatograph. Then, the separation coefficient was calculated by an equation of "the separation coefficient α = (concentration (mass%) of permeated water/concentration (mass%) of permeated ethanol)/(concentration (mass%) of supplied water/concentration (mass%) of supplied ethanol)".

### (Separation Performance Holding Strength)

It was considered that when (the separation coefficient after the pressurizing/the separation coefficient before the pressurizing) < 1, the separation performance deteriorated, and a maximum pressure at which the separation performance did not deteriorate was obtained as the separation performance holding strength. Furthermore, Table 1 shows (the separation coefficient after 6 MPa pressurizing/the separation coefficient before the pressurizing) as "the ratio of the separation performance after 6 MPa pressurizing". In Comparative Examples 1 to 3, the surface layer was made of titania, and hence the separation performance holding strength was small, for example, 5 MPa. On the other hand, in Examples 1 to 22, the surface layer was made of alumina, and hence the separation performance did not deteriorate even after 6 MPa pressurizing. Specifically, in Examples 1 to 22, the separation performance holding strength was 6 MPa or more. In particular, when the particle diameter of alumina of the alumina surface layer 32 was from 0.4 to 3 µm (Example 2 was compared with Examples 9, 3 and 4, the separation performance holding strength was noticeably influenced by the alumina surface layer 32, and hence the examples having the same firing temperature of the alumina surface layer were compared), the separation performance holding strength increased. When the firing temperature of the alumina surface layer 32 was from 1150 to 1450°C (Examples 7 to 10), the separation performance holding strength increased.

Furthermore, in Examples 15, 16 and 19 to 22, the surface and the like included Mg, and the separation performance holding strength was large, for example, from 16 to 18 MPa (as compared with Example 8 which had the same firing temperature and did not contain a magnesium-based compound). It is considered that improvement of the separation performance holding strength is due to improvement of a sinterability of the alumina surface layer due to the addition of the magnesium-based compound.

In Example 5, the particle diameter of the alumina surface layer 32 was large, for example, 6 µm, and in Example 6, the firing temperature was low and hence the separation performance holding strength decreased.

For an effect in a case where the substrate 30 or the intermediate layer 31 includes the inorganic bonding material, Example 9 and Example 12, Example 10 and Example 13, and Example 11 and Example 14 are compared. When the inorganic bonding material is included as in Examples 9, 10 and 11, the substrate 30 and the intermediate layer 31 can be fired at the same temperature as in the surface layer (the layers can be fired at a lower temperature than a temperature of Example 12, 13 or 14), and cost can be reduced. It is considered that in Example 1 and Example 2, particle diameters were small, and hence an effect of the firing temperature was not clearly observed.

### (Measurement of Defect Increase Amount)

A gas having a molecular diameter which was not smaller than a pore diameter of the separation layer formed on the alumina surface layer 32 was introduced into the cells 4 of the separation membrane structure 1, and defects were checked from a permeation amount of a gas which permeated the separation layer 33. In the case of the DDR membrane, sulfur hexafluoride was used. A gas permeation amount (L/(minute·m²·kPa)) was calculated from a flow rate of the gas allowed to flow during the measurement and a pressure of the gas. Specifically, calculation was carried out by an equation of "the gas permeation amount = the gas flow rate/time/membrane area/pressure". Furthermore, it was judged that when (the gas permeation amount after the pressurizing/the gas permeation amount before the pressurizing) > 1, the defects larger than the pore diameters increased ("the ratio of the gas allowed to permeate the defect after 6 MPa pressurizing" of Table 1).

In Comparative Examples 1 to 3, the ratio of the gas allowed to permeate the defect after 6 MPa pressurizing was > 1, and hence it was recognized that the defects larger than the pore diameters increased. On the other hand, in Examples 1 to 22, the ratio after 6 MPa pressurizing did not change, and it was not recognized that the defects increased. It is considered that each of Examples 1 to 22 has the alumina surface layer 32, and a pressure resistance performance improves.

It is seen from Table 2 that as the firing temperature of the alumina surface layer 32 is higher, the performance holding strength increases, however the alumina pores are clogged to lower the CO₂ permeation amount. That is, in Examples 7 to 10, both of the separation performance holding strength and the CO₂ permeation amount had good results, and the firing temperature of the alumina surface layer 32 was preferably from 1150 to 1450°C.

Additionally, in Example 19, the large-sized substrate 30 (the porous body 9) was used in which an outer diameter was 180 mm and a length (a total length) in a central axis direction was 1000 mm, however concerning the separation performance holding strength and the ratio of the gas allowed to permeate the defect after 6 MPa pressurizing, suitable results were obtained. That is, when the alumina surface layer 32 is formed, it is possible to obtain the ceramic separation membrane structure 1 in which an operation pressure is higher than before and the separation performance does not deteriorate regardless of a size of the substrate 30 (the porous body 9).

### Industrial Applicability

In a honeycomb shaped porous ceramic body of the present invention, a separation layer having a pressure resistance can be formed. Furthermore, a honeycomb shaped ceramic separation membrane structure of the present invention can suitably be utilized as means for separating part of components from a mixed fluid.

### Description of Reference Numerals

1: (honeycomb shaped ceramic) separation membrane structure, 2, 2a and 2b: end face, 3: partition wall, 4: cell, 4a: separation cell, 4b: water collecting cell, 6: outer peripheral surface, 7: discharge through channel, 8: plugging portion, 9: (honeycomb shaped ceramic) porous body, 30: substrate, 31: intermediate layer, 31a: first intermediate layer, 31b: second intermediate layer, 32: alumina surface layer, 33: separation layer, 35: glass seal, 40: substrate thickness, 41: intermediate layer thickness, 42: surface layer thickness, 43: cell diameter, 51: housing, 52: fluid inlet, 53 and 58: fluid outlet, 54: sealing material, 62: wide-mouthed funnel, 63: cock, 64: slurry, 65: pressure-resistant container, 67: sol, and 68: drier.

## Claims

1. A honeycomb shaped porous ceramic body comprising:
a honeycomb shaped substrate which has partition walls made of a porous ceramic material provided with a large number of pores and in which there are formed a plurality of cells to become through channels of a fluid passing through the porous ceramic body by the partition walls;
an intermediate layer which is made of a porous ceramic material provided with a large number of pores and having an average pore diameter smaller than that of the surface of the substrate and which is disposed at the surface of the substrate; and
an alumina-containing alumina surface layer at the outermost surface of the intermediate layer;
wherein the alumina surface layer includes a magnesium-based compound and Mg in the magnesium-based compound is included in the alumina surface layer so that a mass ratio represented by (Mg/(Mg + Al)) × 100 is 30 mass% or less.

2. The honeycomb shaped porous ceramic body according to claim 1,
wherein the alumina surface layer is formed of alumina particles having particle diameters of 0.4 to 3 µm.

3. The honeycomb shaped porous ceramic body according to claim 1 or 2,
wherein in a part of at least one of the substrate and the intermediate layer, aggregate particles are bonded to one another by an inorganic bonding component.

4. A honeycomb shaped ceramic separation membrane structure comprising the honeycomb shaped porous ceramic body according to any one of claims 1 to 3 and a separation layer which separates a mixed fluid at the surface of the alumina surface layer of the honeycomb shaped porous ceramic body.

5. The honeycomb shaped ceramic separation membrane structure according to claim 4,
wherein a separation performance holding strength as a maximum pressure at which defects are not generated in the separation layer due to pressurizing and hence a separation performance does not deteriorate is 6 MPa or more.

6. The honeycomb shaped ceramic separation membrane structure according to claim 4 or 5,
wherein the separation layer is a gas separation membrane for use to selectively separate carbon dioxide.

7. The honeycomb shaped ceramic separation membrane structure according to any one of claims 4 to 6,
wherein the separation layer is made of zeolite.

8. A manufacturing method for a honeycomb shaped porous ceramic body according to any one of claims 1 to 3, comprising
preparing a honeycomb shaped unfired substrate having separation cells and water collecting cells,
forming, in the obtained unfired substrate, discharge through channels each of which passes from one region of the outer peripheral surface through the water collecting cell to communicate with another region,
charging a plugging material of a slurry state into a space reaching the discharge through channels from both the end faces of the water collecting cells of the unfired substrate with the obtained discharge through channels,
firing the unfired substrate into which the plugging material is charged,
preparing a slurry for the intermediate layer,
adhering the slurry for the intermediate layer to inner wall surfaces of the separation cells of the substrate, drying and sintering to form the intermediate layer,
preparing a slurry for the alumina surface layer, and
forming the alumina surface layer on the intermediate layer by adhering the slurry for the alumina surface layer to the surface of the porous body, followed by drying and firing, wherein the alumina surface layer is formed by firing at 1150 to 1450°C.

## Patentansprüche

1. Honigwabenförmiger poröser keramischer Körper, umfassend:
ein honigwabenförmiges Substrat, welches aus einem porösen keramischen Material, das mit einer großen Anzahl an Poren ausgestattet ist, hergestellte Trennwände aufweist, und in welchem eine Mehrzahl von Zellen gebildet ist, um Durchgangskanäle eines durch den porösen Körper über die Trennwände tretenden Fluids zu werden;
eine Zwischensicht, welche aus einem porösen keramischen Material, das mit einer großen Anzahl an Poren ausgestattet ist, hergestellt ist und einen kleineren durchschnittlichen Porendurchmesser als den der Oberfläche des Substrats aufweist und welche an der Oberfläche des Substrats angeordnet ist; und
eine Aluminiumoxid-enthaltende Aluminiumoxidoberflächenschicht an der äußersten Oberfläche der Zwischenschicht;
wobei die Aluminiumoxidoberflächenschicht eine Magnesium-basierte Verbindung beinhaltet und Mg in der Magnesium-basierten Verbindung in der Aluminiumoxidoberflächenschicht so beinhaltet ist, dass ein Masseverhältnis, das durch (Mg/(Mg + AI)) x 100 dargestellt ist, 30 Masse-% oder weniger beträgt.

2. Honigwabenförmiger poröser keramischer Körper nach Anspruch 1,
wobei die Aluminiumoxidoberflächenschicht aus Aluminiumoxidteilchen mit Teilchendurchmessern von 0,4 bis 3 µm gebildet ist.

3. Honigwabenförmiger poröser keramischer Körper nach Anspruch 1 oder 2,
wobei in einem Teil von zumindest einem aus dem Substrat und der Zwischensicht Aggregatteilchen durch einen anorganischen Bindebestandteil aneinander gebunden sind.

4. Honigwabenförmige keramische Trennmembranstruktur, umfassend den honigwabenförmigen porösen keramischen Körper nach einem der Ansprüche 1 bis 3 und eine Trennschicht, welche ein gemischtes Fluid trennt, an der Oberfläche der Aluminiumoxidoberflächenschicht des honigwabenförmigen porösen keramischen Körpers.

5. Honigwabenförmige keramische Trennmembranstruktur nach Anspruch 4,
wobei die Trennleistungsfähigkeitsbeibehaltungsstärke als ein Maximaldruck, bei welchem in der Trennschicht keine Defekte aufgrund der Druckbeaufschlagung erzeugt werden und somit eine Trennleistungsfähigkeit sich nicht verschlechtert, 6 MPa oder mehr beträgt.

6. Honigwabenförmige keramische Trennmembranstruktur nach Anspruch 4 oder 5,
wobei die Trennschicht eine Gastrennmembran zur Verwendung zum selektiven Abtrennen von Kohlendioxid ist.

7. Honigwabenförmige keramische Trennmembranstruktur nach einem der Ansprüche 4 bis 6,
wobei die Trennschicht aus Zeolith hergestellt ist.

8. Herstellungsverfahren für einen honigwabenförmigen keramischen Körper nach einem der Ansprüche 1 bis 3, umfassend
Zubereiten eines honigwabenförmigen nicht gebrannten Substrats mit Trennzellen und Wassersammelzellen,
Bilden, in dem erhaltenen nicht gebrannten Substrat, von Auslassdurchgangskanälen, von denen jeder von einem Bereich der äußeren peripheren Oberfläche durch die Wassersammelzelle tritt, um mit einem anderen Bereich in Verbindung zu stehen,
Einbringen eines Verschlussmaterials im Aufschlämmungszustand in einem Freiraum, der die Auslassdurchgangskanäle erreicht, von beiden Endflächen der Wassersammelzellen des ungebrannten Substrats mit den erhaltenen Auslassdurchgangskanälen,
Brennen des ungebrannten Substrats, in welches das Verschlussmaterial eingebracht ist,
Zubereiten einer Aufschlämmung für die Zwischenschicht,
Anhaften der Aufschlämmung für die Zwischenschicht an innere Wandoberflächen der Trennzellen des Substrats, Trocknen und Sintern, um die Zwischenschicht zu bilden,
Zubereiten einer Aufschlämmung für die Aluminiumoxidoberflächenschicht, und
Bilden der Aluminiumoxidoberflächenschicht auf der Zwischenschicht durch Anhaften der Aufschlämmung für die Aluminiumoxidoberflächenschicht auf die Oberfläche des porösen Körpers, gefolgt von Trocknen und Brennen, wobei die Aluminiumoxidoberflächenschicht durch Brennen bei 1150 bis 1450°C gebildet wird.

## Revendications

1. Corps céramique poreux en forme de nid d'abeille comprenant :
un substrat en forme de nid d'abeille qui a des parois de séparation faites en un matériau céramique poreux doté d'un grand nombre de pores, et dans lequel sont formés une pluralité d'alvéoles destinées à devenir des canaux traversants pour un fluide traversant le corps céramique poreux par les parois de séparation ;
une couche intermédiaire qui est faite en un matériau céramique poreux doté d'un grand nombre de pores et ayant un diamètre de pore moyen inférieur à celui de la surface du substrat, et qui est disposée à la surface du substrat ; et
une couche de surface en alumine contenant de l'alumine au niveau de la surface la plus extérieure de la couche intermédiaire ;
dans lequel la couche de surface en alumine contient un composé à base de magnésium, et le Mg dans le composé à base de magnésium est incorporé dans la couche de surface en alumine de façon que le rapport en masse représenté par (Mg/(Mg + Al)) × 100 soit de 30 % en masse ou moins.

2. Corps céramique poreux en forme de nid d'abeille selon la revendication 1, dans lequel la couche de surface en alumine est formée de particules d'alumine ayant une granulométrie de 0,4 à 3 µm.

3. Corps céramique poreux en forme de nid d'abeille selon la revendication 1 ou 2, dans lequel, dans une partie d'au moins l'un parmi le substrat et la couche intermédiaire, des particules agrégées sont liées entre elles par un composant liant inorganique.

4. Structure de membrane de séparation en céramique en forme de nid d'abeille comprenant le corps céramique poreux en forme de nid d'abeille selon l'une quelconque des revendications 1 à 3 et une couche de séparation qui sépare un fluide mélangé à la surface de la couche de surface en alumine du corps céramique poreux en forme de nid d'abeille.

5. Structure de membrane de séparation en céramique en forme de nid d'abeille selon la revendication 4, dans laquelle la résistance au maintien de la performance de séparation, représentée par la pression maximale à laquelle des défauts ne sont pas générés dans la couche de séparation en raison d'une pressurisation, et donc à laquelle la performance de séparation ne se détériore pas, est de 6 MPa ou plus.

6. Structure de membrane de séparation en céramique en forme de nid d'abeille selon la revendication 4 ou 5, dans laquelle la couche de séparation est une membrane de séparation de gaz destinée à être utilisée pour séparer sélectivement le dioxyde de carbone.

7. Structure de membrane de séparation en céramique en forme de nid d'abeille selon l'une quelconque des revendications 4 à 6, dans laquelle la couche de séparation est faite en zéolite.

8. Procédé de fabrication d'un corps céramique poreux en forme de nid d'abeille selon l'une quelconque des revendications 1 à 3, comprenant
la préparation d'un substrat cru en forme de nid d'abeille ayant des alvéoles de séparation et des alvéoles de collecte d'eau,
la formation, dans le substrat cru obtenu, de canaux traversants de décharge qui passent chacun depuis une région de la surface périphérique extérieure à travers l'alvéole de collecte d'eau pour communiquer avec une autre région,
le chargement d'un matériau d'obturation à l'état de bouillie dans un espace atteignant les canaux traversants de décharge depuis les deux faces d'extrémité des alvéoles de collecte d'eau du substrat cru avec les canaux traversants de décharge obtenus,
la cuisson du substrat cru dans lequel le matériau d'obturation est chargé,
la préparation d'une bouillie pour la couche intermédiaire,
l'adhésion de la bouillie pour la couche intermédiaire à des surfaces de parois intérieures des alvéoles de séparation du substrat, le séchage et le frittage pour former la couche intermédiaire,
la préparation d'une bouillie pour la couche de surface en alumine, et
la formation de la couche de surface en alumine sur la couche intermédiaire par adhésion de la bouillie pour la couche de surface en alumine à la surface du corps poreux, suivie d'un séchage et d'une cuisson, laquelle couche de surface en alumine est formée par cuisson à une température de 1 150 à 1 450 °C.
